# EUROPEAN PATENT APPLICATION

(11) **EP 4 811 591 A1**
(43) Date of publication of application: **23.09.2026**
(21) Application number: 24902235.1
(22) Date of filing: 06.09.2024
(51) Int. Cl.: H02J 3/38, H02J 3/32, H02H 7/122, H02H 7/125, H02H 7/18, H02J 7/00

(54) **ENERGY STORAGE SYSTEM AND PHOTOVOLTAIC SYSTEM**

(30) Priority: 13.12.2023 CN 202311725487
(71) Applicant: Huawei Digital Power Technologies Co., Ltd., Shenzhen, Guangdong 518043 (CN)
(72) Inventor: TANG, Yunyu, Shenzhen, Guangdong 518043 (CN); ZHANG, Yaojia, Shenzhen, Guangdong 518043 (CN); ZHAN, Jinxiang, Shenzhen, Guangdong 518043 (CN); SHI, Lei, Shenzhen, Guangdong 518043 (CN)
(74) Representative: Isarpatent
(86) International application number: PCT/CN2024/117498
(87) International publication number: WO 2025/123809

(57) **Abstract**

This application provides an energy storage system and a photovoltaic system. The energy storage system includes an energy storage unit and a power conversion system. A positive terminal of the energy storage unit is configured to connect to a positive terminal of the power conversion system through a first protection unit, and a negative terminal of the energy storage unit is configured to connect to a negative terminal of the power conversion system through a second protection unit. The second protection unit includes a switch unit and an anti-reverse-connection unit that are connected in parallel. The switch unit is turned on when the energy storage unit is charged or discharged, so that an electrical connection between the energy storage unit and the power conversion system is conducted. The anti-reverse-connection unit is configured to unidirectionally conduct, when the switch unit is turned off, a current flowing from the negative terminal of the power conversion system to the negative terminal of the energy storage unit. When the power conversion system is short-circuited, the first protection unit is turned off; and when the energy storage unit is short-circuited, the switch unit is turned off. When a short-circuit fault occurs in the power conversion system or the energy storage unit, the energy storage system provided in this application can rectify, in time, the short-circuit fault that occurred, thereby preventing fault propagation.

## Description

### CROSS-REFERENCE TO RELATED APPLICATIONS

This application claims priority to Chinese Patent Application No. 202311725487.5, filed with the China National Intellectual Property Administration on December 13, 2023 and entitled "ENERGY STORAGE SYSTEM AND PHOTOVOLTAIC SYSTEM", which is incorporated herein by reference in its entirety.

### TECHNICAL FIELD

This application relates to the fault protection field, and in particular, to an energy storage system and a photovoltaic system.

### BACKGROUND

Energy storage systems are widely used in various scenarios, such as industrial and commercial use, power stations, household use, and charging stations. A power conversion system (power conversion system, PCS) in an energy storage system mainly performs conversion between a direct current and an alternating current, and can control charging and discharging processes of a battery. Usually, a plurality of PCSs are configured in an energy storage system to convert electric energy simultaneously. When a PCS is faulty or a battery pack connected to the PCS is faulty, normal working of another PCS in the energy storage system is affected, which affecting working efficiency of the energy storage system.

### SUMMARY

This application provides an energy storage system and a photovoltaic system, so that when a short-circuit fault occurs in a power conversion system or an energy storage unit, the short-circuit fault that occurred can be rectified in time, thereby preventing fault propagation.

According to a first aspect, this application provides an energy storage system. The energy storage system includes an energy storage unit and a power conversion system, the energy storage unit includes a plurality of battery packs, and the energy storage unit is configured to output discharging power to a power grid or a load through the power conversion system, or is configured to receive, through the power conversion system, charging power input by a photovoltaic system or a power grid. A positive terminal of the energy storage unit is configured to connect to a positive terminal of the power conversion system through a first protection unit, and a negative terminal of the energy storage unit is configured to connect to a negative terminal of the power conversion system through a second protection unit. The second protection unit includes a switch unit and an anti-reverse-connection unit that are connected in parallel. The switch unit is configured to be turned on when the energy storage unit is charged or discharged, so that an electrical connection between the energy storage unit and the power conversion system is conducted. The anti-reverse-connection unit is configured to unidirectionally conduct, when the switch unit is turned off, a current flowing from the negative terminal of the power conversion system to the negative terminal of the energy storage unit. When the power conversion system is short-circuited, the first protection unit is turned off; and when the energy storage unit is short-circuited, the switch unit is turned off.

When the positive and negative terminals of the energy storage unit are reversely connected to those of the power conversion system in the energy storage system, the anti-reverse-connection unit can prevent a current from damaging a switch device in the power conversion system. In addition, when the power conversion system is short-circuited, the first protection unit can be turned off to disconnect the connection between the positive terminal of the energy storage unit and the positive terminal of the power conversion system, to protect the energy storage unit. When the energy storage unit is short-circuited, the switch unit can be turned off to disconnect the connection between the negative terminal of the energy storage unit and the negative terminal of the power conversion system, to protect the power conversion system.

In a possible implementation, when the power conversion system is short-circuited, the switch unit is turned off; and when the energy storage unit is short-circuited, the first protection unit is turned off. When the power conversion system is short-circuited, the switch unit can be turned off to disconnect the connection between the negative terminal of the energy storage unit and the negative terminal of the power conversion system, to protect the energy storage unit. When the energy storage unit is short-circuited, the first protection unit can be turned off to disconnect the connection between the positive terminal of the energy storage unit and the positive terminal of the power conversion system, to protect the power conversion system.

In a possible implementation, that the power conversion system is short-circuited means that a voltage between the positive terminal of the power conversion system and the negative terminal of the power conversion system is less than a first voltage threshold, and that a current flowing through the first protection unit is greater than a first current threshold. Values of voltages at both terminals of the power conversion system and a value of the current between the power conversion system and the energy storage unit may be detected to determine whether the power conversion system is short-circuited.

In a possible implementation, that the power conversion system is short-circuited means that a current flowing through the first protection unit is greater than a first current threshold, and that a current direction is from the positive terminal of the energy storage unit to the negative terminal of the energy storage unit. Because a short-circuit current flows unidirectionally when the power conversion system is short-circuited, a value and a direction of a current between the power conversion system and the energy storage unit may be detected to determine whether the power conversion system is short-circuited.

In a possible implementation, that the energy storage unit is short-circuited means that a voltage between the positive terminal of the energy storage unit and the negative terminal of the energy storage unit is less than a second voltage threshold, and that a current flowing through the second protection unit is greater than a second current threshold. Values of voltages at both terminals of the energy storage unit and a value of a current between the power conversion system and the energy storage unit may be detected to determine whether the energy storage unit is short-circuited.

In a possible implementation, that the energy storage unit is short-circuited means that a current flowing through the second protection unit is greater than a second current threshold, and that a current direction is from the positive terminal of the power conversion system to the negative terminal of the power conversion system. Because a short-circuit current flows unidirectionally when the energy storage unit is short-circuited, a value and a direction of a current between the power conversion system and the energy storage unit may be detected to determine whether the power conversion system is short-circuited.

In a possible implementation, the first protection unit is a pyrofuse, and the pyrofuse is configured to be turned off when a temperature is greater than a safe temperature threshold. The pyrofuse can play a final protection role. To be specific, when a current between the energy storage unit and the power conversion system is excessively large or the temperature exceeds the safe temperature threshold and a fault is still not rectified, an explosive apparatus in the pyrofuse explodes to instantly cut off a circuit, thereby preventing a short-circuit current from continuing to flow and avoiding a fault and a danger.

In a possible implementation, a controller is included. When the power conversion system is short-circuited, the first protection unit is controlled by the controller to be turned off.

In a possible implementation, a controller is included. When the energy storage unit is short-circuited, the switch unit is controlled by the controller to be turned off.

In a possible implementation, the controller is configured to obtain a value of the voltage between the positive terminal of the power conversion system and the negative terminal of the power conversion system and a value of the current flowing through the first protection unit, or the controller is configured to obtain a value and a direction of the current flowing through the first protection unit.

In a possible implementation, the controller is configured to obtain a value of the voltage between the positive terminal of the energy storage unit and the negative terminal of the energy storage unit and a value of the current flowing through the second protection unit, or the controller is configured to obtain a value and a direction of the current flowing through the second protection unit.

In a possible implementation, a charging pile is included, and the power conversion system is further configured to convert a direct current output by the energy storage unit into an alternating current, and output the alternating current to the charging pile. The energy storage system provided in this application is further applied to a scenario of charging an electric vehicle. The power conversion system converts a direct current provided by the energy storage unit into an alternating current, and provides the alternating current to the charging pile, so that the charging pile charges the electric vehicle with the alternating current.

According to a second aspect, this application provides a photovoltaic system. The photovoltaic system includes a photovoltaic module, a power converter, and an energy storage unit. The power converter is configured to perform direct current voltage conversion on a direct current output by the photovoltaic module, and then input charging power to the energy storage unit. A positive terminal of the photovoltaic module is configured to connect to a positive terminal of the power converter through a first protection unit, and a negative electrode of the photovoltaic module is configured to connect to a negative terminal of the power converter through a second protection unit. The second protection unit includes a switch unit and an anti-reverse-connection unit that are connected in parallel. The switch unit is configured to be turned on when the photovoltaic module is discharged, so that an electrical connection between the photovoltaic module and the power converter is conducted. The anti-reverse-connection unit is configured to unidirectionally conduct, when the switch unit is turned off, a current flowing from the negative terminal of the photovoltaic module to the negative terminal of the power converter. When the power converter is short-circuited, the first protection unit is turned off; and when the photovoltaic module is short-circuited, the switch unit is turned off.

When the positive and negative terminals of the photovoltaic module are reversely connected to those of the power converter in the photovoltaic system, the anti-reverse-connection unit can prevent a current from damaging a switch device in the power converter. In addition, when the power converter is short-circuited, the first protection unit can be turned off to disconnect the connection between the positive terminal of the photovoltaic module and the positive terminal of the power converter, to protect the photovoltaic module. When the photovoltaic module is short-circuited, the switch unit can be turned off to disconnect the connection between the negative terminal of the photovoltaic module and the negative terminal of the power converter, to protect the power converter.

In a possible implementation, when the power converter is short-circuited, the switch unit is turned off; and when the photovoltaic module is short-circuited, the first protection unit is turned off. When the power converter is short-circuited, the switch unit can be turned off to disconnect the connection between the negative terminal of the photovoltaic module and the negative terminal of the power converter, to protect the photovoltaic module. When the photovoltaic module is short-circuited, the first protection unit can be turned off to disconnect the connection between the positive terminal of the photovoltaic module and the positive terminal of the power converter, to protect the power converter.

In a possible implementation, that the power converter is short-circuited means that a voltage between the positive terminal of the power converter and the negative terminal of the power converter is less than a first voltage threshold, and that a current flowing through the first protection unit is greater than a first current threshold; or that the power converter is short-circuited means that a current flowing through the first protection unit is greater than a first current threshold, and that a current direction is from the negative terminal of the photovoltaic module to the positive terminal of the photovoltaic module.

In a possible implementation, that the photovoltaic module is short-circuited means that a voltage between the positive terminal of the photovoltaic module and the negative terminal of the photovoltaic module is less than a second voltage threshold, and that a current flowing through the second protection unit is greater than a second current threshold; or that the photovoltaic module is short-circuited means that a current flowing through the second protection unit is greater than a second current threshold, and that a current direction is from the negative terminal of the power converter to the positive terminal of the power converter.

In a possible implementation, the first protection unit is a pyrofuse, and the pyrofuse is configured to be turned off when a temperature is greater than a safe temperature threshold.

In a possible implementation, a controller is included. When the power converter is short-circuited, the first protection unit is controlled by the controller to be turned off; or when the photovoltaic module is short-circuited, the switch unit is controlled by the controller to be turned off.

In a possible implementation, the controller is configured to obtain a value of the voltage between the positive terminal of the power converter and the negative terminal of the power converter, a value of the current flowing through the first protection unit, and the value and a direction of the current flowing through the first protection unit. In addition, the controller is configured to obtain a value of the voltage between the positive terminal of the photovoltaic module and the negative terminal of the photovoltaic module, a value of the current flowing through the second protection unit, and a direction of the current flowing through the second protection unit.

In a possible implementation, a charging pile is included, and the power converter is further configured to perform direct current voltage conversion on a direct current output by the energy storage unit or the photovoltaic module, and then output a converted direct current to the charging pile.

### BRIEF DESCRIPTION OF DRAWINGS

FIG. 1 is a first diagram of a structure of a power conversion system according to this application;
FIG. 2 is a first diagram of a short-circuit fault;
FIG. 3 is a second diagram of a short-circuit fault;
FIG. 4A is a first diagram of a layout structure of protection units;
FIG. 4B is a second diagram of a layout structure of protection units;
FIG. 4C is a third diagram of a layout structure of protection units;
FIG. 4D is a fourth diagram of a layout structure of protection units;
FIG. 5 is a third diagram of a short-circuit fault;
FIG. 6 is a fourth diagram of a short-circuit fault;
FIG. 7 is a fifth diagram of a short-circuit fault;
FIG. 8 is a sixth diagram of a short-circuit fault;
FIG. 9 is a diagram of a short-circuit protection structure according to this application;
FIG. 10 is a diagram of a structure of an energy storage system according to this application;
FIG. 11 is a diagram of a short-circuit detection structure according to this application; and
FIG. 12 is a diagram of a structure of a photovoltaic system.

### DESCRIPTION OF EMBODIMENTS

The following first describes some terms used in embodiments of this application to help a person skilled in the art have a better understanding.

A pyrofuse (pyrofuse) is a protection apparatus used in power system and is mainly used to prevent an overload or short-circuit fault. The pyrofuse includes a small explosive apparatus, which is connected to a fuse or a fuse element in a circuit. When a current exceeds a rated current of the fuse or the fuse element, the explosive apparatus explodes to instantly cut off the circuit, thereby preventing the current from continuing to flow and avoiding a fault and a danger.

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in description of this application, "at least one" means one or more, and "a plurality of" means two or more. In view of this, in embodiments of the present invention, "a plurality of" may also be understood as "at least two". The term "and/or" describes an association relationship for describing associated objects and represents that three relationships may exist. For example, "A and/or B" may represent the following three cases: Only A exists, both A and B exist, and only B exists. In addition, the character "/" generally indicates an "or" relationship between the associated objects, unless otherwise specially stated. In addition, it should be understood that in description of this application, terms such as "first" and "second" are merely used for distinguishing and description, but should not be understood as indicating or implying relative importance, or should not be understood as indicating or implying a sequence.

It should be noted that, in embodiments of this application, "connection" means an electrical connection, and a connection between two electrical elements may be a direct or indirect connection between the two electrical elements. For example, that A is connected to B may be that A is directly connected to B, or may be that A is indirectly connected to B through one or more other electrical elements. For example, that A is connected to B may also be that A is directly connected to C, C is directly connected to B, and A and B are connected through C.

In an energy storage system, if a power conversion system is faulty and is not rectified in time, working of another power conversion system in the energy storage system is affected, leading to fault propagation. Therefore, a power conversion system in the energy storage system can be actively rectified if a short-circuit fault occurs in the power conversion system to avoid affecting normal working of the entire energy storage system. When a short-circuit fault occurs in an energy storage unit connected to a specific power conversion system, the energy storage unit needs to be actively separated from the energy storage system, and the energy storage unit accesses the energy storage system again after the fault is rectified.

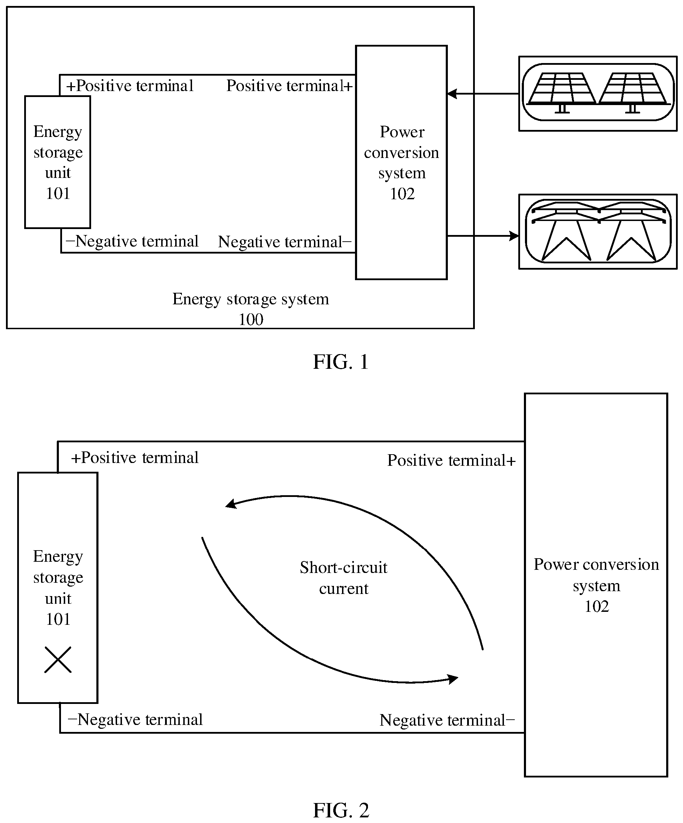

To implement the foregoing requirement, this application provides an energy storage system. FIG. 1 is a first diagram of a structure of an energy storage system according to this application. The energy storage system 100 includes an energy storage unit 101 and a power conversion system 102. The energy storage unit 101 includes one or more batteries connected in series or in parallel. The battery may include a lead-acid battery (or referred to as a lead-acid storage battery), a sodium battery, a lithium-ion battery (for example, a lithium iron phosphate battery or a ternary lithium battery), or the like. A specific type of the battery is not limited in this application.

The power conversion system 102 in this application is a bidirectional conversion circuit. When electric energy is transmitted from a first end of the power conversion system 102 to a second end of the power conversion system 102, the first end of the power conversion system 102 is used as an input of the power conversion system 102 to receive the electric energy, and the second end of the power conversion system 102 is used as an output of the power conversion system 102 to output the electric energy. When the electric energy is transmitted from the second end of the power conversion system 102 to the first end of the power conversion system 102, the second end of the power conversion system 102 is used as an input of the power conversion system 102 to receive the electric energy, and the first end of the power conversion system 102 is used as an output of the power conversion system 102 to output the electric energy.

It may be understood that, the power conversion system 102 not only can receive charging power of a photovoltaic system to charge the energy storage unit 101, but also can perform power conversion on direct-current electric energy of the energy storage unit 101 to output alternating-current electric energy to a power grid or a load, to supply power to the power grid or the load.

FIG. 2 is a first diagram of a short-circuit fault. When a short-circuit fault occurs in the energy storage unit 101, because a power grid voltage still exists on a power grid side, a short-circuit current flows counterclockwise from a negative bus to a positive bus. In this case, if the faulty energy storage unit 101 is controlled to be disconnected from the power conversion system 102, the short-circuit fault that occurs in the energy storage unit 101 can be rectified in time.

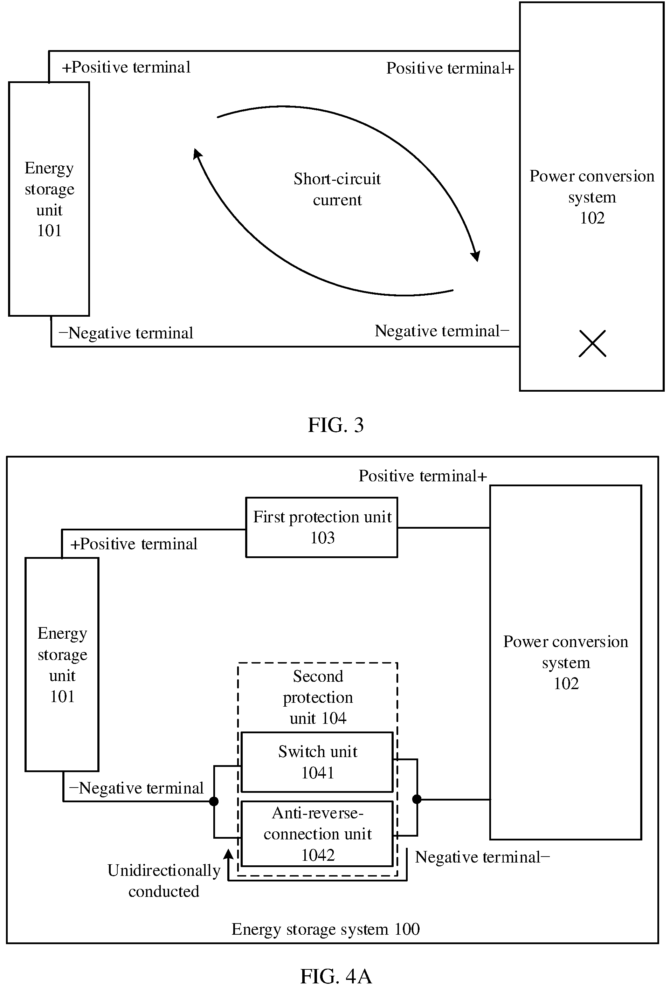

FIG. 3 is a second diagram of a short-circuit fault. When a short-circuit fault occurs in the power conversion system 102, because a voltage exists in the energy storage unit 101, a short-circuit current flows clockwise from a positive bus to a negative bus. In this case, if the faulty power conversion system 102 is controlled to be disconnected from the energy storage unit 101, the short-circuit fault that occurs in the power conversion system 102 can be rectified in time, thereby preventing fault propagation of the faulty power conversion system 102.

Therefore, a first protection unit 103 and a second protection unit 104 are added to the energy storage system 100 provided in this application, so that when the short-circuit fault occurs in the energy storage unit 101 or the power conversion system 102, the first protection unit 103 and the second protection unit 104 are controlled to rectify a faulty part in time.

FIG. 4A is a first diagram of a layout structure of protection units. A positive terminal of the energy storage unit 101 is configured to connect to a positive terminal of the power conversion system 102 through the first protection unit 103, and a negative terminal of the energy storage unit 101 is configured to connect to a negative terminal of the power conversion system 102 through the second protection unit 104.

The second protection unit 104 includes a switch unit 1041 and an anti-reverse-connection unit 1042 that are connected in parallel. The switch unit 1041 is configured to be turned on when the energy storage unit 101 is charged or discharged, so that an electrical connection between the energy storage unit 101 and the power conversion system 102 is conducted. The anti-reverse-connection unit 1042 is configured to unidirectionally conduct, when the switch unit 1041 is turned off, a current flowing from the negative terminal of the power conversion system 102 to the negative terminal of the energy storage unit 101.

In this manner, if a short-circuit current flows from the negative terminal of the energy storage unit 101 to the negative terminal of the power conversion system 102, the short-circuit current is still prevented from flowing through because of the unidirectional conduction characteristic of the anti-reverse-connection unit 1042. When the short-circuit current flows from the negative terminal of the power conversion system 102 to the negative terminal of the energy storage unit 101, the first protection unit 103 may be controlled to disconnect the positive terminal of the power conversion system 102 from the positive terminal of the energy storage unit 101. In this way, short-circuit protection may also be implemented.

In addition, when the power conversion system 102 is short-circuited, the switch unit 1041 may be further controlled to be turned off; and when the energy storage unit 101 is short-circuited, the first protection unit 103 may be further controlled to be turned off.

That the power conversion system 102 is short-circuited means that a voltage between the positive terminal of the power conversion system 102 and the negative terminal of the power conversion system 102 is less than a first voltage threshold, and that a current flowing through the first protection unit 103 is greater than a first current threshold; or that the power conversion system 102 is short-circuited means that a current flowing through the first protection unit 103 is greater than a first current threshold, and that a current direction is from the positive terminal of the energy storage unit 101 to the negative terminal of the energy storage unit 101. Alternatively, that the energy storage unit 101 is short-circuited means that a voltage between the positive terminal of the energy storage unit 101 and the negative terminal of the energy storage unit 101 is less than a second voltage threshold, and that a current flowing through the second protection unit 104 is greater than a second current threshold; or that the energy storage unit 101 is short-circuited means that a current flowing through the second protection unit 104 is greater than a second current threshold, and that a current direction is from the positive terminal of the power conversion system 102 to the negative terminal of the power conversion system 102.

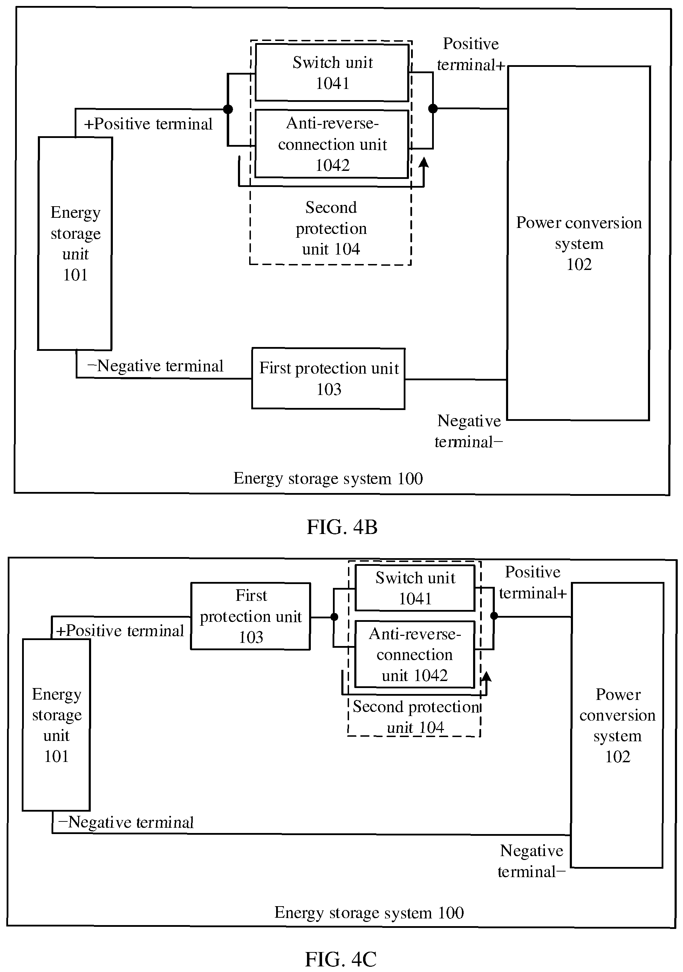

FIG. 4B is a second diagram of a layout structure of protection units. In a possible implementation, the anti-reverse-connection unit 1042 is connected between the positive terminal of the power conversion system 102 and the positive terminal of the energy storage unit 101 to unidirectionally conduct a current from the positive terminal of the energy storage unit 101 to the positive terminal of the power conversion system 102. The switch unit 1041 and the anti-reverse-connection unit 1042 are connected in parallel. The first protection unit 103 is connected between the negative terminal of the power conversion system 102 and the negative terminal of the energy storage unit 101 to conduct or disconnect the connection between the negative terminal of the power conversion system 102 and the negative terminal of the energy storage unit 101.

In this manner, if a short-circuit current flows from the positive terminal of the power conversion system 102 to the positive terminal of the energy storage unit 101, the short-circuit current is still prevented from flowing through because of the unidirectional conduction characteristic of the anti-reverse-connection unit 1042. When the short-circuit current flows from the positive terminal of the energy storage unit 101 to the positive terminal of the power conversion system 102, the first protection unit 103 may be controlled to disconnect the negative terminal of the power conversion system 102 from the negative terminal of the energy storage unit 101. In this way, short-circuit protection may also be implemented.

In addition, the first protection unit 103 and the second protection unit 104 may also be located on a direct current bus on a same side. FIG. 4C is a third diagram of a layout structure of protection units. The anti-reverse-connection unit 1042 is connected between the positive terminal of the power conversion system 102 and the positive terminal of the energy storage unit 101 to unidirectionally conduct a current from the positive terminal of the energy storage unit 101 to the positive terminal of the power conversion system 102. The switch unit 1041 and the anti-reverse-connection unit 1042 are connected in parallel. The first protection unit 103 is also connected between the positive terminal of the power conversion system 102 and the positive terminal of the energy storage unit 101 to conduct or disconnect the connection between the positive terminal of the power conversion system 102 and the positive terminal of the energy storage unit 101.

In this way, when a short-circuit current flows from the positive terminal of the energy storage unit 101 to the positive terminal of the power conversion system 102, the first protection unit 103 may be controlled to disconnect the positive terminal of the power conversion system 102 from the positive terminal of the energy storage unit 101. In this way, short-circuit protection may also be implemented.

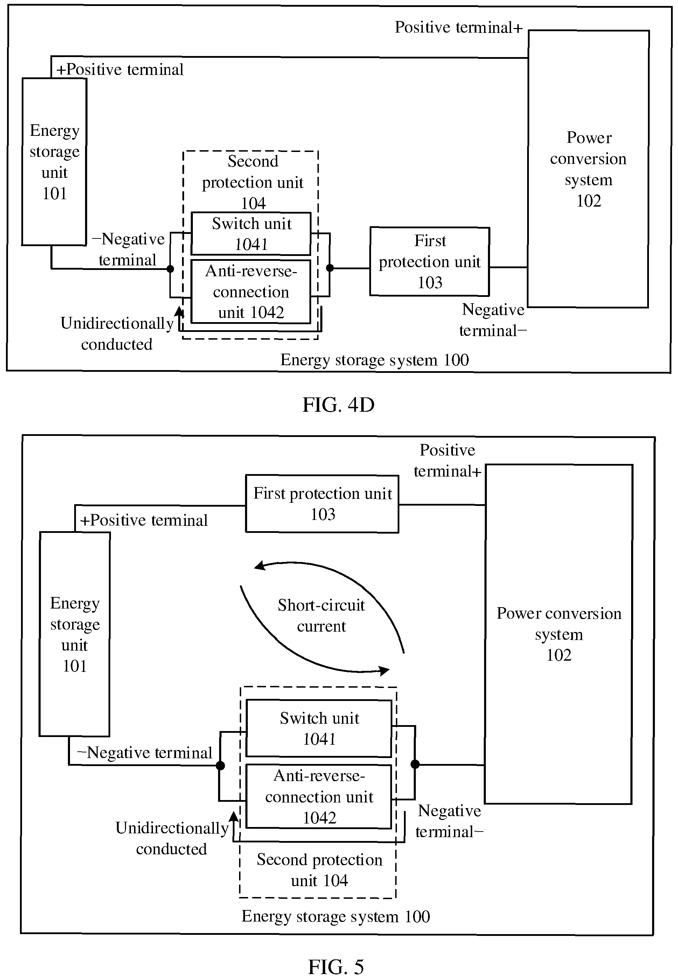

FIG. 4D is a fourth diagram of a layout structure of protection units. The anti-reverse-connection unit 1042 is connected between the negative terminal of the power conversion system 102 and the negative terminal of the energy storage unit 101 to unidirectionally conduct a current from the positive terminal of the power conversion system 102 to the positive terminal of the energy storage unit 101. The switch unit 1041 and the anti-reverse-connection unit 1042 are connected in parallel. The first protection unit 103 is also connected between the negative terminal of the power conversion system 102 and the negative terminal of the energy storage unit 101 to conduct or disconnect the connection between the positive terminal of the power conversion system 102 and the positive terminal of the energy storage unit 101.

In this way, when a short-circuit current flows from the negative terminal of the power conversion system 102 to the negative terminal of the energy storage unit 101, the first protection unit 103 may be controlled to disconnect the negative terminal of the power conversion system 102 from the negative terminal of the energy storage unit 101. In this way, short-circuit protection may also be implemented.

Based on the structure in FIG. 4A, FIG. 5 is a third diagram of a short-circuit fault. When a short-circuit fault occurs in the power conversion system 102, because a power grid voltage still exists on a power grid side, a short-circuit current flows counterclockwise from a negative bus to a positive bus. In this case, the first protection unit 103 or the switch unit 104 is controlled to disconnect the faulty energy storage unit 101 from the power conversion system 102, so that the short-circuit fault that occurs in the energy storage unit 101 can be rectified in time.

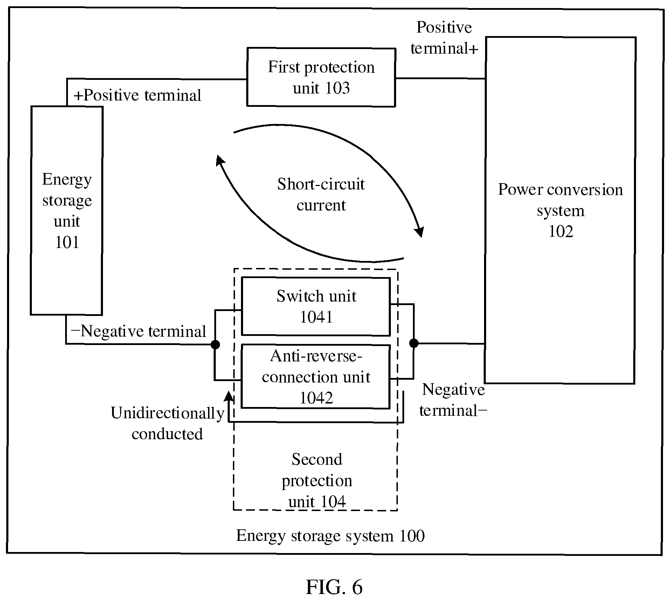

FIG. 6 is a fourth diagram of a short-circuit fault. When a short-circuit fault occurs in the power conversion system 102, because a voltage exists in the energy storage unit 101, a short-circuit current flows clockwise from a positive bus to a negative bus. In this case, a direction of the short-circuit current is consistent with a unidirectional conduction direction of the anti-reverse-connection unit 1042. In addition, because the anti-reverse-connection unit 1042 is connected in parallel with the switch unit 1041, even if the switch unit 1041 is turned off, the short-circuit fault that occurs in the power conversion system 102 cannot be rectified in time. In this case, the first protection unit 103 may be turned off to disconnect the faulty energy storage unit 101 from the power conversion system 102, so that the power conversion system 102 that occurs in the energy storage unit 101 can be cut off in time.

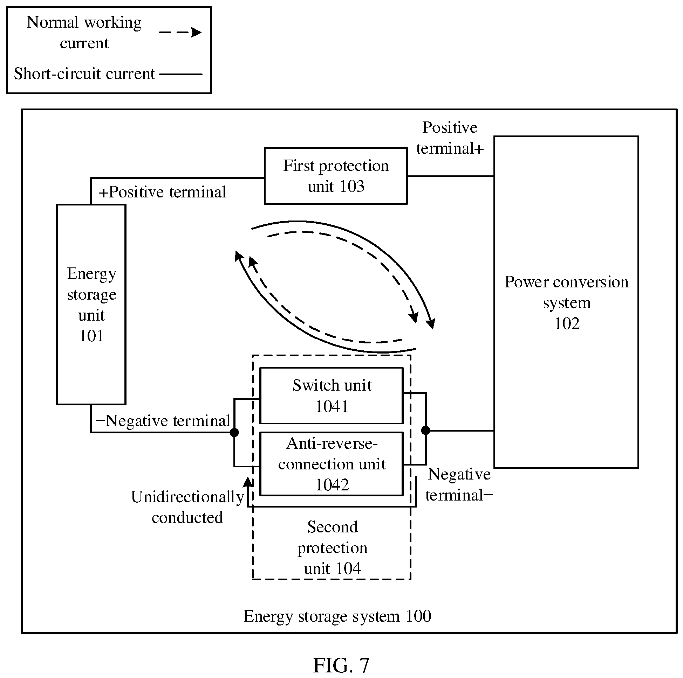

Considering that the power conversion system 102 is in different working states before a short-circuit fault occurs, FIG. 7 is a fifth diagram of a short-circuit fault. If the energy storage unit 101 is in a discharging state before a short-circuit fault occurs in the power conversion system 102, a normal working current flows clockwise from a positive bus to a negative bus. In this case, the power conversion system 102 works in an inversion mode, and the power conversion system 102 is configured to convert a direct current input by the energy storage unit 101 into an alternating current, and output the alternating current to a power grid. However, when a short-circuit fault occurs in the power conversion system 102, because a battery voltage exists in a battery in the energy storage unit 101, a short-circuit current also flows clockwise from the positive bus to the negative bus. Therefore, the switch unit 1041 or the first protection unit 103 may be controlled to be turned off to rectify, in time, the short-circuit fault that occurs in the power conversion system 102, thereby preventing fault propagation.

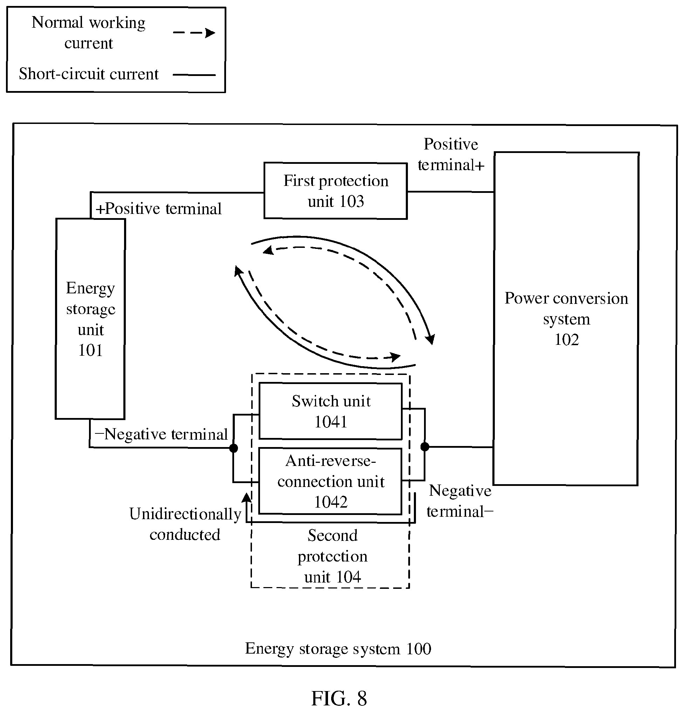

FIG. 8 is a sixth diagram of a short-circuit fault. If the energy storage unit 101 is in a charging state before a short-circuit fault occurs in the power conversion system 102, a normal working current flows counterclockwise from a negative bus to a positive bus. In this case, the power conversion system 102 works in a rectification mode, and the power conversion system 102 is configured to convert an alternating current input by a power grid into a direct current, and output the direct current to the energy storage unit 101, to charge the energy storage unit 101. However, when a short-circuit fault occurs in the power conversion system 102, the negative terminal of the faulty energy storage unit 101 needs to be first controlled to be disconnected from the negative terminal of the power conversion system 102, to cut off a current during normal working. In this case, the switch unit 1041 is correspondingly controlled to disconnect the negative terminal of the energy storage unit 101 from the negative terminal of the power conversion system 102, to cut off a current during normal working. After the disconnection, because a battery voltage exists in the energy storage unit 101, a short-circuit current also flows clockwise from the positive bus to the negative bus. Therefore, the positive terminal of the faulty energy storage unit 101 needs to be controlled to be disconnected from the positive terminal of the faulty power conversion system 102. In this case, the first protection unit 103 is correspondingly controlled to disconnect the positive terminal of the energy storage unit 101 from the positive terminal of the power conversion system 102, to cut off the short-circuit current, thereby rectifying, in time, the short-circuit fault that occurs in the power conversion system 102, and preventing fault propagation.

The first protection unit 103 is connected between the negative terminal of the power conversion system 102 and the negative terminal of the energy storage unit 101 to unidirectionally conduct a current from the negative terminal of the power conversion system 102 to the negative terminal of the energy storage unit 101. The switch unit 1041 and the anti-reverse-connection unit 1042 are connected in parallel. The first protection unit 103 is connected between the positive terminal of the power conversion system 102 and the positive terminal of the energy storage unit 101 to conduct or disconnect the connection between the positive terminal of the power conversion system 102 and the positive terminal of the energy storage unit 101.

In this manner, if a short-circuit current flows from the negative terminal of the energy storage unit 101 to the negative terminal of the power conversion system 102, the short-circuit current is still prevented from flowing through because of the unidirectional conduction characteristic of the first protection unit 103. When the short-circuit current flows from the negative terminal of the power conversion system 102 to the negative terminal of the energy storage unit 101, the first protection unit 103 may be controlled to disconnect the positive terminal of the power conversion system 102 from the positive terminal of the energy storage unit 101. In this way, short-circuit protection may also be implemented.

The switch unit 1041 and the anti-reverse-connection unit 1042 may be configured to perform overload protection and short-circuit protection. The switch unit 1041 and the first protection unit 103 may be mechanical control devices, or may be electronic control devices, for example, a switch device with a controller. The anti-reverse-connection unit 1042 may be a diode or the like.

To further implement short-circuit fault protection, in a possible implementation, the switch unit 1041 is a switching transistor, the anti-reverse-connection unit 1042 may be a diode, and the first protection unit 103 is a pyrofuse.

The diode in the anti-reverse-connection unit 1042 may be connected between the negative terminal of the energy storage unit 101 and the negative terminal of the power conversion system 102, and is configured to unidirectionally conduct a current from the negative terminal of the power conversion system 102 to the negative terminal of the energy storage unit 101.

When the positive and negative electrodes of the energy storage unit 101 are reversely connected to the positive and negative terminals of the power conversion system 102, the diode included in the anti-reverse-connection unit 1042 may be uses as a bypass reverse current flowing into the power conversion system 102, so that a current output by the positive electrode of the energy storage unit 101 flows back to the negative electrode of the energy storage unit 101 through the diode in the anti-reverse-connection unit 1042, thereby preventing the reverse current from damaging the switching transistor of the power conversion system 102. Further, because the switch unit 1041 and the anti-reverse-connection unit 1042 are connected in parallel, the switch unit 1041 and the anti-reverse-connection unit 1042 do not work simultaneously.

When a short-circuit fault occurs in the energy storage unit 101, the switching transistor included in the anti-reverse-connection unit 1042 is turned off to rectify the short-circuit fault. In addition, when a current between the power conversion system 102 and the energy storage unit 101 is greater than a first current threshold and duration is greater than or equal to a first time threshold, it indicates that the short-circuit current is still not cut off, and the pyrofuse in the first protection unit 103 can further play a final protection role. To be specific, when the current between the power conversion system 102 and the energy storage unit 101 is excessively large and is not cut off after the first time threshold, an explosive apparatus in the pyrofuse explodes to instantly cut off a circuit, thereby preventing the short-circuit current from continuing to flow and avoiding a fault and a danger.

In addition, in this embodiment of this application, the switching transistor is used to disconnect the connection between the faulty energy storage unit 101 and the power conversion system 102. Therefore, when the energy storage unit 101 is restored to normal, a controller may further re-turn on the switching transistor in the anti-reverse-connection unit 1042 to restore the connection between the energy storage unit 101 and the power conversion system 102.

Optionally, the switching transistor may be an insulated gate bipolar transistor (insulated gate bipolar transistor, IGBT) and an anti-parallel diode thereof, a metal-oxide-semiconductor field-effect transistor (metal-oxide-semiconductor field-effect transistor, MOSFET), or the like. A specific structure inside the switching transistor is not limited in this application.

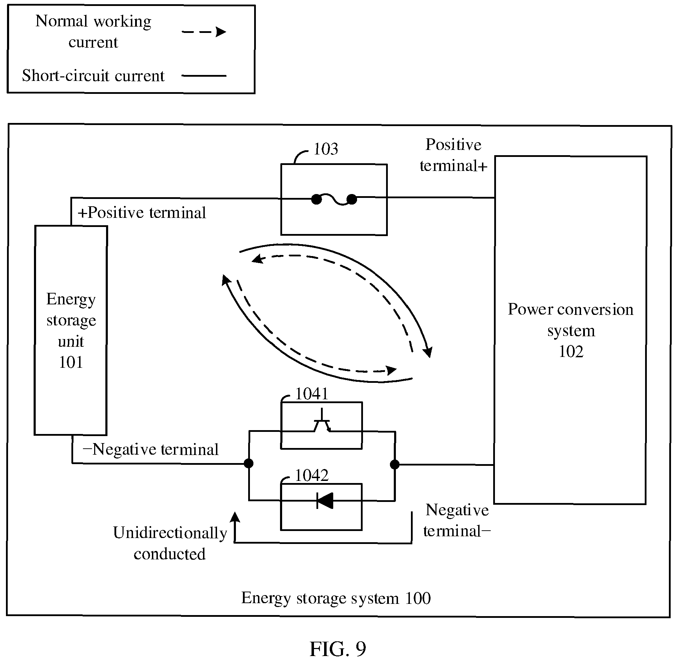

For the several short-circuit scenarios described above, FIG. 9 is a diagram of a short-circuit protection structure according to this application. If a short-circuit fault occurs in the energy storage unit 101, because a power grid voltage still exists on a power grid side, a short-circuit current flows counterclockwise from a negative bus to a positive bus. In this case, because a direction of the short-circuit current is opposite to a direction of a conducted current in the switching transistor in the anti-reverse-connection unit 1042, the short-circuit fault that occurs in the energy storage unit 101 can be rectified in time, thereby avoiding affecting normal working of the energy storage system.

If the energy storage unit 101 is in a discharging state before a short-circuit fault occurs in the power conversion system 102, a normal working current flows clockwise from a positive bus to a negative bus. In this case, the power conversion system 102 works in an inversion mode, and the power conversion system 102 is configured to convert a direct current input by the energy storage unit 101 into an alternating current, and output the alternating current to a power grid. However, when a short-circuit fault occurs in the power conversion system 102, because a battery voltage exists in the energy storage unit 101, a short-circuit current flows clockwise from the positive bus to the negative bus. In this case, because a direction of the short-circuit current is consistent with a direction of a conducted current in the diode in the anti-reverse-connection unit 1042, even if the switch unit 1041 is turned off, the short-circuit current still flows through the diode in the anti-reverse-connection unit 1042. Therefore, the pyrofuse in the first protection unit 103 may be controlled to disconnect the positive terminal of the faulty power conversion system 102 from the positive terminal of the energy storage unit 101. In this way, the short-circuit fault that occurs in the power conversion system 102 can be rectified in time, thereby preventing fault propagation.

If a battery is in a charging state before a short-circuit fault occurs in the power conversion system 102, a normal working current flows counterclockwise from a negative bus to a positive bus. In this case, the power conversion system 102 works in a rectification mode, and the power conversion system 102 is configured to convert an alternating current input by a power grid into a direct current, and output the direct current to a side of the energy storage unit 101, to charge the energy storage unit 101. However, when a short-circuit fault occurs in the power conversion system 102, the switching transistor in the switch unit 1041 needs to be first controlled to be turned off to disconnect the negative terminal of the energy storage unit 101 from the negative terminal of the faulty power conversion system 102, to cut off a normal working current. In addition, a battery voltage exists on a side of the energy storage unit 101, and a short-circuit current flows clockwise from the positive bus to the negative bus. Therefore, the pyrofuse may be controlled to be turned off to disconnect the positive terminal of the faulty power conversion system 102 from the positive terminal of the energy storage unit 101. In this way, the short-circuit fault that occurs in the power conversion system 102 can be rectified in time, thereby preventing fault propagation.

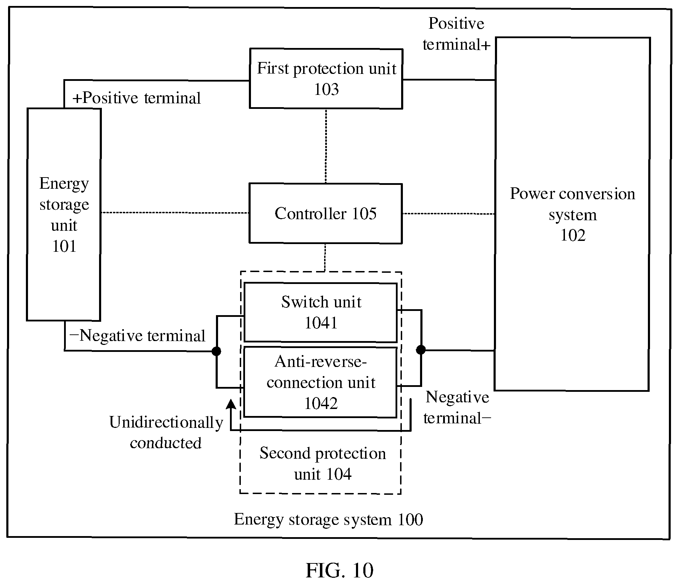

FIG. 10 is a diagram of a structure of an energy storage system according to this application. In a possible implementation, the energy storage system 100 includes a controller 105. The controller 105 is configured to obtain a value of the voltage between the positive terminal of the power conversion system 102 and the negative terminal of the power conversion system 102 and a value of the current flowing through the first protection unit 103; or the controller 105 is configured to obtain a value and a direction of the current flowing through the first protection unit 103. The controller 105 is configured to obtain a value of the voltage between the positive terminal of the energy storage unit 101 and the negative terminal of the energy storage unit 101 and a value of the current flowing through the second protection unit 104; or the controller 105 is configured to obtain a value and a direction of the current flowing through the second protection unit 104.

The controller may be a general-purpose central processing unit (central processing unit, CPU), a general-purpose processor, a digital signal processor (digital signal processor, DSP), an application-specific integrated circuit (application-specific integrated circuits, ASIC), a field-programmable gate array (field-programmable gate array, FPGA) or another programmable logic device, a transistor logic device, a hardware component, or any combination thereof. The controller may implement or execute various example logical blocks, modules, and circuits described with reference to content disclosed in this application. Alternatively, the processor may be a combination for implementing a computing function, for example, a combination including one or more microprocessors or a combination of a DSP and a microprocessor. In addition, the controller may further include a battery management system (battery management system, BMS). The BMS may perform online monitoring and estimation on the power conversion system 102 to obtain a state of a battery in the power conversion system 102, and may further equalize, by using a current state and some algorithms, the battery in the power conversion system 102, and determine whether a short-circuit fault occurs in the power conversion system 102.

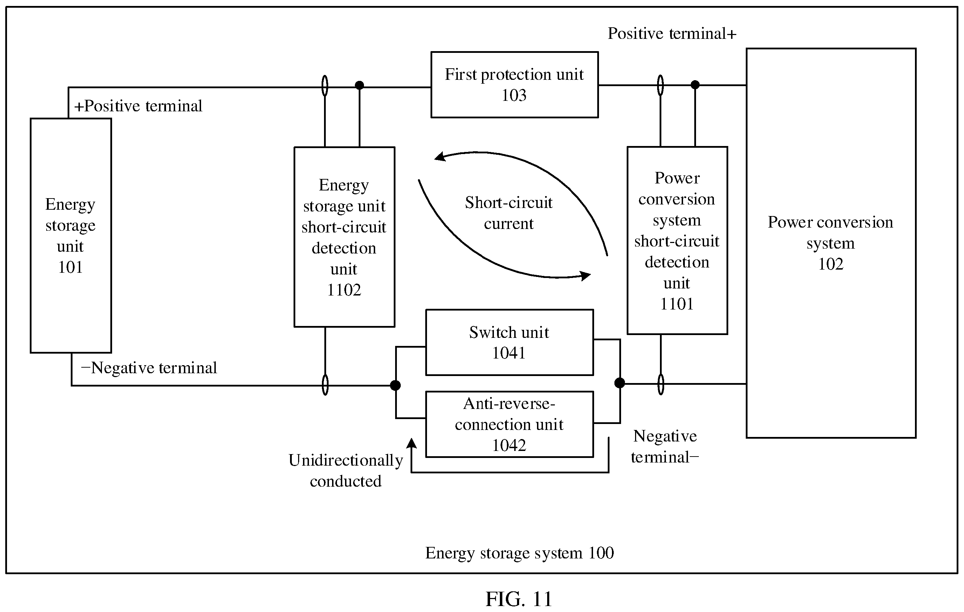

FIG. 11 is a diagram of a short-circuit detection structure according to this application. In a possible implementation, the energy storage system 100 further includes a power conversion system short-circuit detection unit 1101 and an energy storage unit short-circuit detection unit 1102. The power conversion system short-circuit detection unit 1101 is configured to detect whether the power conversion system is short-circuited, and the energy storage unit short-circuit detection unit 1102 is configured to detect whether the energy storage unit is short-circuited. Specific structures of the power conversion system short-circuit detection unit 1101 and the energy storage unit short-circuit detection unit 1102 are not limited in this application, and may be any manner that can be used to detect whether a short circuit occurs in units in the energy storage system 100.

In a possible implementation, the energy storage system 100 further includes a charging pile, and the power conversion system is further configured to convert a direct current output by the energy storage unit into an alternating current, and output the alternating current to the charging pile.

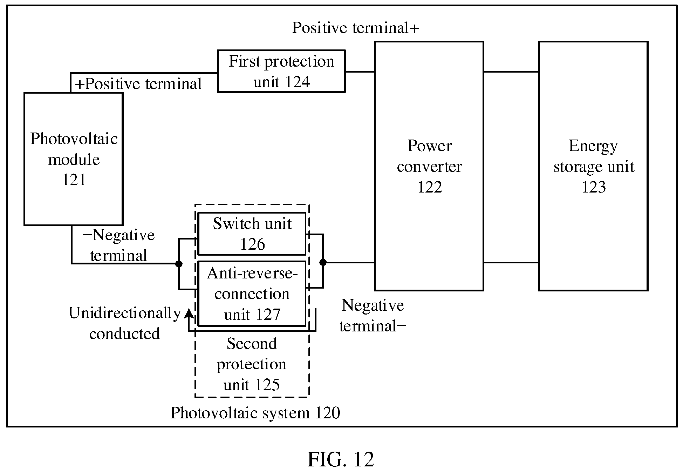

Based on a same concept, this application provides a photovoltaic system. FIG. 12 is a diagram of a structure of a photovoltaic system. The photovoltaic system 120 includes a photovoltaic module 121, a power converter 122, and an energy storage unit 123. The power converter 122 is configured to perform direct current voltage conversion on a direct current output by the photovoltaic module 121, and then input charging power to the energy storage unit 123. A positive terminal of the photovoltaic module 121 is configured to connect to a positive terminal of the power converter 122 through a first protection unit 124, and a negative electrode of the photovoltaic module 121 is configured to connect to a negative terminal of the power converter 122 through a second protection unit 125. The second protection unit 125 includes a switch unit 126 and an anti-reverse-connection unit 127 that are connected in parallel. The switch unit 126 is configured to be turned on when the photovoltaic module 121 is discharged, so that an electrical connection between the photovoltaic module 121 and the power converter 122 is conducted. The anti-reverse-connection unit 127 is configured to unidirectionally conduct, when the switch unit 126 is turned off, a current flowing from the negative terminal of the photovoltaic module 121 to the negative terminal of the power converter 122. When the power converter 122 is short-circuited, the first protection unit 124 is turned off; and when the photovoltaic module 121 is short-circuited, the switch unit 126 is turned off.

In a possible implementation, when the power converter is short-circuited, the switch unit is turned off; and when the photovoltaic module is short-circuited, the first protection unit is turned off.

In a possible implementation, that the power converter is short-circuited means that a voltage between the positive terminal of the power converter and the negative terminal of the power converter is less than a first voltage threshold, and that a current flowing through the first protection unit is greater than a first current threshold; or that the power converter is short-circuited means that a current flowing through the first protection unit is greater than a first current threshold, and that a current direction is from the negative terminal of the photovoltaic module to the positive terminal of the photovoltaic module.

In a possible implementation, that the photovoltaic module is short-circuited means that a voltage between the positive terminal of the photovoltaic module and the negative terminal of the photovoltaic module is less than a second voltage threshold, and that a current flowing through the second protection unit is greater than a second current threshold; or that the photovoltaic module is short-circuited means that a current flowing through the second protection unit is greater than a second current threshold, and that a current direction is from the negative terminal of the power converter to the positive terminal of the power converter.

In a possible implementation, the first protection unit is a pyrofuse, and the pyrofuse is configured to be turned off when a temperature is greater than a safe temperature threshold.

In a possible implementation, a controller is included. When the power converter is short-circuited, the first protection unit is controlled by the controller to be turned off; or when the photovoltaic module is short-circuited, the switch unit is controlled by the controller to be turned off.

In a possible implementation, the controller is configured to obtain a value of the voltage between the positive terminal of the power converter and the negative terminal of the power converter, a value of the current flowing through the first protection unit, and the value and a direction of the current flowing through the first protection unit. In addition, the controller is configured to obtain a value of the voltage between the positive terminal of the photovoltaic module and the negative terminal of the photovoltaic module, a value of the current flowing through the second protection unit, and a direction of the current flowing through the second protection unit.

In a possible implementation, a charging pile is included, and the power converter is further configured to perform direct current voltage conversion on a direct current output by the energy storage unit or the photovoltaic module, and then output a converted direct current to the charging pile.

It is clearly that a person skilled in the art can make various modifications and variations to this application without departing from the spirit and scope of this application. This application is intended to cover these modifications and variations made to this application provided that they fall within the scope of the claims of this application and equivalent technologies thereof.

## Claims

1. An energy storage system, wherein the energy storage system comprises an energy storage unit and a power conversion system, the energy storage unit comprises a plurality of battery packs, and the energy storage unit is configured to output discharging power to a power grid or a load through the power conversion system, or is configured to receive, through the power conversion system, charging power input by a photovoltaic system or a power grid;
a positive terminal of the energy storage unit is configured to connect to a positive terminal of the power conversion system through a first protection unit, and a negative terminal of the energy storage unit is configured to connect to a negative terminal of the power conversion system through a second protection unit;
the second protection unit comprises a switch unit and an anti-reverse-connection unit that are connected in parallel, wherein the switch unit is configured to be turned on when the energy storage unit is charged or discharged, so that an electrical connection between the energy storage unit and the power conversion system is conducted, and the anti-reverse-connection unit is configured to unidirectionally conduct, when the switch unit is turned off, a current flowing from the negative terminal of the power conversion system to the negative terminal of the energy storage unit;
when the power conversion system is short-circuited, the first protection unit is turned off; and
when the energy storage unit is short-circuited, the switch unit is turned off.

2. The energy storage system according to claim 1, wherein
when the power conversion system is short-circuited, the switch unit is turned off; and
when the energy storage unit is short-circuited, the first protection unit is turned off.

3. The energy storage system according to claim 1 or 2, wherein that the power conversion system is short-circuited means that a voltage between the positive terminal of the power conversion system and the negative terminal of the power conversion system is less than a first voltage threshold, and that a current flowing through the first protection unit is greater than a first current threshold.

4. The energy storage system according to claim 1 or 2, wherein that the power conversion system is short-circuited means that a current flowing through the first protection unit is greater than a first current threshold, and that a current direction is from the positive terminal of the energy storage unit to the negative terminal of the energy storage unit.

5. The energy storage system according to claim 1 or 2, wherein that the energy storage unit is short-circuited means that a voltage between the positive terminal of the energy storage unit and the negative terminal of the energy storage unit is less than a second voltage threshold, and that a current flowing through the second protection unit is greater than a second current threshold.

6. The energy storage system according to claim 1 or 2, wherein that the energy storage unit is short-circuited means that a current flowing through the second protection unit is greater than a second current threshold, and that a current direction is from the positive terminal of the power conversion system to the negative terminal of the power conversion system.

7. The energy storage system according to any one of claims 1 to 6, wherein the first protection unit is a pyrofuse, and the pyrofuse is configured to be turned off when a temperature is greater than a safe temperature threshold.

8. The energy storage system according to claim 7, comprising a controller, wherein
when the power conversion system is short-circuited, the first protection unit is controlled by the controller to be turned off.

9. The energy storage system according to claim 7, comprising a controller, wherein
when the energy storage unit is short-circuited, the switch unit is controlled by the controller to be turned off.

10. The energy storage system according to claim 8, wherein the controller is configured to obtain a value of the voltage between the positive terminal of the power conversion system and the negative terminal of the power conversion system and a value of the current flowing through the first protection unit; or
the controller is configured to obtain a value and a direction of the current flowing through the first protection unit.

11. The energy storage system according to claim 9, wherein the controller is configured to obtain a value of the voltage between the positive terminal of the energy storage unit and the negative terminal of the energy storage unit and a value of the current flowing through the second protection unit; or
the controller is configured to obtain a value and a direction of the current flowing through the second protection unit.

12. The energy storage system according to any one of claims 1 to 11, comprising a charging pile, wherein the power conversion system is further configured to convert a direct current output by the energy storage unit into an alternating current, and output the alternating current to the charging pile.

13. A photovoltaic system, wherein the photovoltaic system comprises a photovoltaic module, a power converter, and an energy storage unit, and the power converter is configured to perform direct current voltage conversion on a direct current output by the photovoltaic module, and then input charging power to the energy storage unit;
a positive terminal of the photovoltaic module is configured to connect to a positive terminal of the power converter through a first protection unit, and a negative electrode of the photovoltaic module is configured to connect to a negative terminal of the power converter through a second protection unit;
the second protection unit comprises a switch unit and an anti-reverse-connection unit that are connected in parallel, wherein the switch unit is configured to be turned on when the photovoltaic module is discharged, so that an electrical connection between the photovoltaic module and the power converter is conducted, and the anti-reverse-connection unit is configured to unidirectionally conduct, when the switch unit is turned off, a current flowing from the negative terminal of the photovoltaic module to the negative terminal of the power converter;
when the power converter is short-circuited, the first protection unit is turned off; and
when the photovoltaic module is short-circuited, the switch unit is turned off.

14. The photovoltaic system according to claim 13, wherein
when the power converter is short-circuited, the switch unit is turned off; and
when the photovoltaic module is short-circuited, the first protection unit is turned off.

15. The photovoltaic system according to claim 13 or 14, wherein that the power converter is short-circuited means that a voltage between the positive terminal of the power converter and the negative terminal of the power converter is less than a first voltage threshold, and that a current flowing through the first protection unit is greater than a first current threshold; or
that the power converter is short-circuited means that a current flowing through the first protection unit is greater than a first current threshold, and that a current direction is from the negative terminal of the photovoltaic module to the positive terminal of the photovoltaic module.

16. The photovoltaic system according to claim 13 or 14, wherein that the photovoltaic module is short-circuited means that a voltage between the positive terminal of the photovoltaic module and the negative terminal of the photovoltaic module is less than a second voltage threshold, and that a current flowing through the second protection unit is greater than a second current threshold; or
that the photovoltaic module is short-circuited means that a current flowing through the second protection unit is greater than a second current threshold, and that a current direction is from the negative terminal of the power converter to the positive terminal of the power converter.

17. The photovoltaic system according to any one of claims 13 to 16, wherein the first protection unit is a pyrofuse, and the pyrofuse is configured to be turned off when a temperature is greater than a safe temperature threshold.

18. The photovoltaic system according to any one of claims 13 to 17, comprising a controller, wherein
when the power converter is short-circuited, the first protection unit is controlled by the controller to be turned off; or
when the photovoltaic module is short-circuited, the switch unit is controlled by the controller to be turned off.

19. The photovoltaic system according to claim 18, wherein the controller is configured to obtain a value of the voltage between the positive terminal of the power converter and the negative terminal of the power converter, a value of the current flowing through the first protection unit, and the value and a direction of the current flowing through the first protection unit; and
the controller is configured to obtain a value of the voltage between the positive terminal of the photovoltaic module and the negative terminal of the photovoltaic module, a value of the current flowing through the second protection unit, and a direction of the current flowing through the second protection unit.

20. The photovoltaic system according to any one of claims 13 to 19, comprising a charging pile, wherein the power converter is further configured to perform direct current voltage conversion on a direct current output by the energy storage unit or the photovoltaic module, and then output a converted direct current to the charging pile.
